# FASCICULE DE BREVET EUROPEEN

(11) **EP 0 389 307 B1**
(45) Date de publication et mention de la délivrance du brevet: **18.11.1993**
(21) Numéro de dépôt: 90400164.1
(22) Date de dépôt: 22.01.1990
(51) Int. Cl.: B60C 5/08

(54) **Chambre à air, notamment pour véhicule du type bicyclette ou cyclomoteur**
Schlauch, insbesondere für Fahrräder oder Motorräder
Tyre inner tube, especially for a bicycle or motorcycle

(30) Priorité: 27.01.1989 FR 8900995
(43) Date de publication de la demande: 26.09.1990
(73) Titulaire: HUTCHINSON S.A., F-75008 Paris (FR)
(72) Inventeur: Sicard, Alain, F-45120 Chalette (FR)
(74) Mandataire: Orès, Bernard

(56) Documents cités:
- CH-A- 299 559
- DE-A- 3 325 564
- FR-A- 2 362 735
- US-A- 2 605 200
- US-A- 4 341 577

## Description

L'invention a pour objet une chambre à air, notamment pour véhicule du type bicyclette ou cyclomoteur.

On sait que l'un des inconvénients majeurs lors de l'utilisation de tels véhicules est celui de la crevaison de la chambre à air logée à l'intérieur du pneumatique équipant les roues du véhicules. Outre les dangers que peut entraîner une crevaison, notamment dans le cas d'un véhicule à moteur, celle-ci ne permet plus un roulement satisfaisant, à plat, de sorte que le véhicule est totalement immobilisé s'il ne peut être remédié sur place à la crevaison.

On a déjà proposé, de longue date, des chambres à air destinées à limiter les risques de crevaison comme par exemple US-A-1 463 742 ou US-A-2 605 200. Dans ce dernier document, relatif à une chambre à air pour pneumatique d'automobile (et non pas pour cycle ou motocycle) on prévoit d'associer à la chambre à air proprement dite une bande de jante, de conformer une bande de renfort constituée par des câbles ou fils parallèles suivant au moins deux plis et de rapporter ladite bande de renfort jusqu'au voisinage des talons du pneumatique. Il en résulte une structure lourde, complexe, inappropriée pour l'équipement de roues de bicyclettes ou de cyclomoteurs.

On a également proposé, dans DE-A-3.325 564, d'associer à un pneumatique, mais non pas à une chambre à air, un renfort en matière synthétique qui est, soit simplement posé sur la paroi intérieure du pneumatique, soit fixé sur celle-ci. On a également proposé, dans US-A-4 341 577, un procédé de fabrication d'un pneumatique perfectionné faisant application d'un tissu à base de fibres synthétiques résistantes comme du nylon, du polyester, du verre ou du Kevlar.

Etant entendu que l'élimination de tout risque de crevaison est, bien entendu, impossible, le but de l'invention est de fournir une chambre à air qui diminue notablement les risques de crevaison, notamment par éclat de verre, fragments de roche, pointes et objets pointus, etc ..., tout en ne différant pas des chambres à air usuelles en ce qui concerne son utilisation, sa facilité de transport, de manutention, etc ..., et qui en diffère peu en ce qui concerne son poids, son coût de fabrication et son rendement.

C'est, aussi, un but de l'invention de fournir une telle chambre à air qui conserve au pneumatique dans lequel elle est montée, et après gonflage, les caractéristiques de roulement des pneumatiques équipés de chambres à air usuelles.

C'est, enfin, un but de l'invention de fournir un procédé de fabrication à la fois simple et sûr de telles chambres à air.

Une chambre à air comportant une enveloppe toroïdale en matériau élastomère de forme et taille usuelles pour une chambre à air, notamment une telle chambre pour roue de cycle ou de cyclomoteur avec des moyens de gonflage de ladite chambre et à l'extérieur de l'enveloppe qui la constitue un renfort s'étendant sur une zone de la partie radialement externe de celle-ci est caractérisée, selon l'invention, en ce que le renfort est un pli de tissu mis en biais sur la direction médiane moyenne de la chambre et qui règne sur sensiblement la moitié de la section droite radialement externe de ladite enveloppe.

Selon une autre caractéristique de l'invention, le renfort est un tissu de fibres ou fils d'aramide, comme du Kevlar (une marque déposée de la Société DUPONT DE NEMOURS).

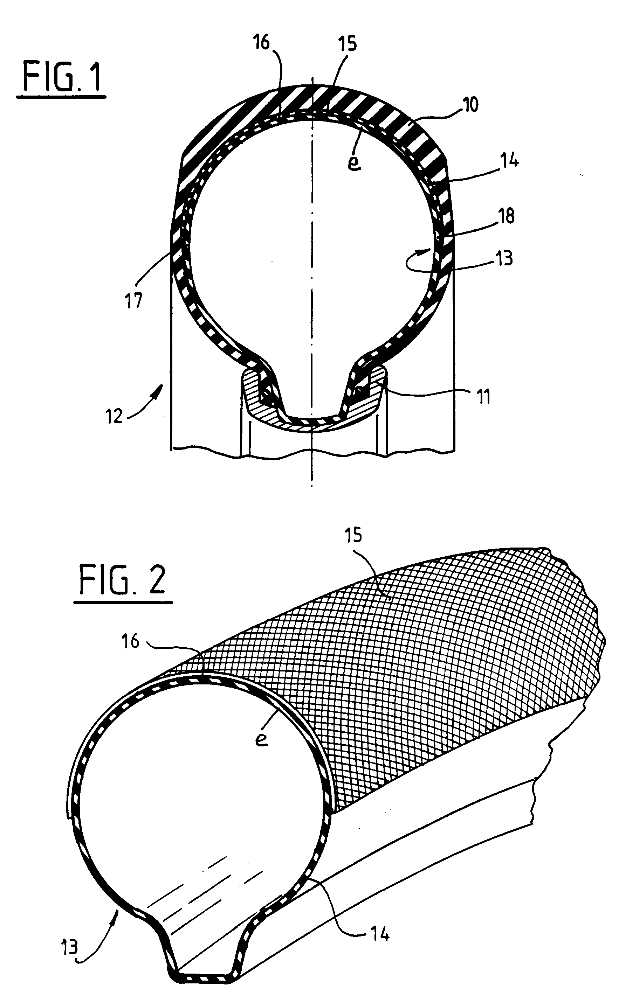

D'autres caractéristiques et avantages de l'invention apparaîtront de la description qui suit, faite à titre d'exemple et référence au dessin annexé qui montre, en coupe et en perspective sur les figures 1 et 2 respectivement, une chambre à air selon l'invention.

Une telle chambre à air, destinée principalement à équiper des pneumatiques de bicyclettes, cyclomoteurs, vélomoteurs ou analogues est constituée à partir d'une chambre à air usuelle en élastomère, par exemple un caoutchouc butyl, dont la section droite, à l'état gonflé, est sensiblement comme montrée sur la figure 1 et qui est logée dans un pneumatique 10 lui-même monté, de façon en soi connue, dans une jante 11 d'une roue 12. La chambre à air 13 qui comporte une enveloppe toroïdale e en matériau élastomère est munie d'une valve, non représentée, pour son gonflage.

Conformément à l'invention, la chambre à air 13 présente sur sa face externe 14, -qui est la plus proche du pneumatique 10 dans sa condition de montage-, un renfort 15 qui en est solidaire et règne avantageusement sur sensiblement la moitié de la section droite de l'enveloppe e, en recouvrant la zone radialement externe 16 de celle-ci jusque environ, la zone médiane des flancs 17 et 18.

Conformément à l'invention, également, le renfort est réalisé en fils ou fibres d'aramide, notamment en de tels fibres ou fils connus sous le nom de Kevlar (une Marque déposée par la Société DUPONT DE NEMOURS).

Dans la réalisation préférée illustrée sur les figures, le renfort 15 est un pli de tissu à chaîne et trame en fils ou fibres de Kevlar, posé en biais sur la surface radialement externe 16 de la chambre à air, de préférence à 45° sur la direction médiane moyenne de la chambre pour autoriser un léger allongement, et qui s'oppose à la pénétration des fragments de roches, éclats de verre, etc ..., susceptibles de provoquer la crevaison de la chambre à air, tout en offrant, en outre, une très grande résistance aux objets pointus comme des épines, des fragments de fils métalliques, etc ..., vraisemblablement en raison de la déformation que peut subir la chambre à air, et cela contrairement aux pneumatiques, rigides et peu déformables, lorsqu'ils comportent des armatures de renfort internes en Kevlar ou analogue.

La présence du renfort selon l'invention n'introduit qu'une faible augmentation du poids de la chambre à air, de l'ordre de 10% dans une réalisation ayant donné satisfaction et qui consistait en un pli de tissu en Kevlar rapporté sur une chambre à air en caoutchouc butyl de dimensions 700 x 20 et d'un poids de 80 g.

Pour la fabrication d'une chambre à air selon l'invention, on rapporte simplement sur une chambre à air usuelle en élastomère, par exemple en caoutchouc butyl, le renfort (pli) enduit du même élastomère ou d'un élastomère compatible et l'ensemble est ensuite vulcanisé soit dans un moule sous presse, soit à plat dans un autoclave usuel sans moule de mise en forme.

Un tel procédé de mise en oeuvre est particulièrement simple, notamment lorsque le renfort est un pli de tissu à base de fils ou fibres en Kevlar qui est préparé à partir d'un tissu en rouleau coupé en biais suivant des lés à la largeur correspondant à la chambre à air et qui préalablement à leur mise en place sont enduits de l'élastomère, comme du caoutchouc butyl, avant que l'ensemble ne soit soumis à un traitement de vulcanisation avec ou sans moulage.

Le montage et le démontage d'une chambre à air perfectionnée selon l'invention est identique à celui d'une chambre à air usuelle.

Elle n'introduit aucune modification des caractéristiques de roulement du véhicule qu'elle équipe et trouve application quels que soient les types de roues de ces véhicules.

En outre, la présence du renfort, notamment lorsque celui-ci est à base de fils ou fibres d'aramide, procure un effet de "bridage" au niveau de la surface de roulement qui conserve l'épaisseur de la chambre et la forme adaptée au positionnement sous la surface de roulement du pneumatique, la déformation de la chambre à air s'effectuant, lors de la mise au rond, par la partie "interne" de la chambre non recouverte de renfort.

## Revendications

1. Chambre à air (13) comportant une enveloppe toroidale (e) en matériau élastomère de forme et taille usuelles pour une chambre à air, notamment une telle chambre pour roue de cycle ou de cyclomoteur avec des moyens de gonflage de ladite chambre et à l'extérieur de l'enveloppe qui la constitue un renfort s'étendant sur une zone de la partie radialement externe de celle-ci, caractérisée en ce que le renfort (15) est un pli de tissu mis en biais sur la direction médiane moyenne de la chambre (13) et qui règne sur sensiblement la moitié de la section droite radialement externe de ladite enveloppe (e).

2. Chambre à air selon la revendication 1, caractérisée en ce que le renfort (15) est un tissu de fils ou fibres d'aramide, comme du Kevlar (une Marque déposée de la Société DUPONT DE NEMOURS).

## Patentansprüche

1. Luftkammer (13) mit einer Toroidhülle (e) aus einem elastomeren Material in einer für eine Luftkammer gebräuchlichen Form und Gestalt, insbesondere für einen Fahrrad- oder Motorradschlauch, mit Mitteln zum Befüllen dieser Kammer und einem Äußeren der Hülle, welche eine Verstärkung bildet, die sich über einen radialen Außenbereich derselben erstreckt, **dadurch gekennzeichnet, daß** die Verstärkung (15) eine Gewebeeinlage ist, die hinsichtlich der Mittellinie der Kammer (13) geneigt ist und im wesentlichen über die Hälfte des radialen äußeren Querschnittes dieser Hülle (e) führt.

2. Luftkammer nach Anspruch 1, **dadurch gekennzeichnet, daß** die Verstärkung (15) ein Aramidfaden- oder -fasergewebe, wie Kevlar, ist (eine Markenbezeichnung von DUPONT DE NEMOURS).

## Claims

1. Tyre inner tube (13) comprising a toroidal envelope (e) in an elastomer material of usual shape and size for a tyre inner tube, particularly such an inner tube for a cycle or moped wheel, with means for inflating the said tube, and, outside the envelope which constitutes it, a reinforcement extending over an area of the radially outer part of the said envelope, characterized in that the reinforcement (15) is a fold of fabric placed slantwise on the mean central direction of the inner tube (13) and which extends over substantially half the straight radially outer section of the said envelope (e).

2. Tyre inner tube according to claim 1, characterized in that the reinforcement (15) is a fabric of aramide threads or fibres such as Kevlar (a registered trademark of the Du Pont De Nemours Company).
